# EUROPÄISCHE PATENTSCHRIFT

(11) **EP 1 487 914 B1**
(45) Veröffentlichungstag und Bekanntmachung des Hinweises auf die Patenterteilung: **23.01.2008**
(21) Anmeldenummer: 03744338.9
(22) Anmeldetag: 03.03.2003
(51) Int. Cl.: C08K 13/02, C08L 55/02

(54) **STABILISATOR-KOMBINATIONEN FÜR POLYMERSYSTEME**
STABILISER COMBINATIONS FOR POLYMER SYSTEMS
COMBINAISONS DE STABILISANTS POUR DES SYSTEMES POLYMERES

(30) Priorität: 15.03.2002 DE 10212120; 15.03.2002 DE 10212119; 15.03.2002 DE 10212118
(43) Veröffentlichungstag der Anmeldung: 22.12.2004
(73) Patentinhaber: LANXESS Deutschland GmbH, 51369 Leverkusen (DE)
(72) Erfinder: EICHENAUER, Herbert, 41539 Dormagen (DE)
(74) Vertreter: Gille Hrabal Struck Neidlein Prop Roos
(86) Internationale Anmeldenummer: PCT/EP2003/002168
(87) Internationale Veröffentlichungsnummer: WO 2003/078523

(56) Entgegenhaltungen:
- EP-A- 0 538 509
- EP-A- 0 550 010
- EP-A- 0 930 332
- WO-A-00/12602
- GB-A- 1 072 922
- GB-A- 1 224 336
- US-A- 2 510 777
- US-A- 3 860 558
- US-A- 4 328 132

## Beschreibung

Gegenstand der Erfindung ist ein Verfahren zur Stabilisierung von Polymeren.

Synthetische Polymere, insbesondere solche mit ungesättigten Bindungen in der Molekülkette, werden durch die Einwirkung oxidativ wirkender Agentien (z.B. Sauerstoff, Ozon), Hitze oder Licht abgebaut, wodurch sich die Eigenschaften verschlechtern und Probleme beim praktischen Einsatz der aus den Polymeren hergestellten Formkörper entstehen.

Zur Verhinderung eines solchen Abbaus wurden bereits zahlreiche Stabilisatoren für Polymere beschrieben (siehe z.B. EP-A 669 367 und dort zitierte Literatur).

Ein besonderes Problem und die erste Aufgabe der vorliegenden Erfindung ist die wirkungsvolle Stabilisierung von in wässriger Dispersion, wässriger Emulsion oder wässriger Suspension hergestellten Polymeren in einem frühen Stadium.

Es wurde nun überraschend gefunden, dass Kombinationen aus Antioxidantien mit sterisch gehinderten Phenolgruppen und speziellen wasserlöslichen anorganischen Phosphorverbindungen eine besonders gute Wirksamkeit bei der Stabilisierung in wässriger Dispersion hergestellter Polymerer aufweisen.

Pfropfkautschukpolymere, insbesondere Pfropfkautschuke für Anwendungsbereiche wie beispielsweise Schlagzähigkeitsmodifikatoren für Polymersysteme, werden oft durch das Verfahren der wässrigen Emulsionspolymerisation hergestellt, wobei als letzter Aufarbeitungsschritt in der Regel ein Trocknungsprozess notwendig ist.

Insbesondere der in den Pfropfkautschukpolymeren enthaltene Kautschukanteil zeigt eine Empfindlichkeit gegenüber oxidativ wirkenden Agenzien (z.B. Peroxide, Sauerstoff, Ozon), die sich üblicherweise im Aufarbeitungs- und Trocknungsprozess negativ bemerkbar macht. Besonders ausgeprägt zeigt sich diese Empfindlichkeit bei Kautschuken mit ungesättigten Anteilen in der Molekülkette wie beispielsweise Polybutadien.

Ein besonderes Problem bei der Aufarbeitung von durch Polymerisation in wässriger Emulsion erzeugten Pfropfkautschukpolymeren ist daher ein möglichst frühzeitiger Schutz des Kautschuks vor oxidativem Abbau bzw. sonstiger oxidativer Beeinträchtigung.

In der Literatur sind zwar zahlreiche Methoden zur Stabilisierung von Pfropfkautschukpolymeren beschrieben (siehe z.B. Gächter/Müller: Kunststoff-Additive, Carl Hanser Verlag München Wien 1979). Nachteile dieser Methoden sind jedoch ein ungenügender Schutz des Polymeren gegen oxidative Reagenzien in der wässrigen Phase sowie eine dadurch bedingte notwendige hohe Dosierung primärer und sekundärer Antioxidantien (in der Regel sterisch gehinderte Phenole und Ester der Thiodipropionsäure bzw. andere schwefelhaltige Verbindungen), was zu hohen Kosten und sonstigen Problemen wie ein zu hoher Anteil an flüchtigen Substanzen (Emissionsproblematik) oder ungewünschte Eigenschaftsveränderungen (z.B. Absenkung des Moduls) führen kann.

Es bestand daher weiterhin die Aufgabe, schon in frühem Stadium gut stabilisierte Emulsions-Pfropfkautschuke unter Verwendung möglichst geringer Mengen an in Form organischer Verbindungen vorliegenden primären Antioxidantien bzw. gegebenenfalls auch möglichst geringer Mengen an entsprechenden sekundären Antioxidantien zur Verfügung zu stellen.

Es wurde nun gefunden, dass durch Emulsionspolymerisation hergestellte Pfropfkautschukpolymere mit verbesserter Stabilität im Aufarbeitungs- und Trocknungsprozess erhalten werden, indem definierte Kombinationen aus Verbindungen mit sterisch gehinderten phenolischen Gruppen und speziellen wasserlöslichen anorganischen Phosphorverbindungen in Form wässriger Zubereitungen vor der Aufarbeitung zugesetzt werden.

ABS-Formmassen sind Zweiphasenkunststoffe aus einem thermoplastischen Copolymerisat harzbildender Monomerer z.B. Styrol und Acrylnitril, wobei das Styrol ganz oder teilweise durch α-Methylstyrol oder Methylmethacrylat ersetzt werden kann, dieses Copolymerisat, auch als SAN-Harz oder Matrix-Harz bezeichnet, bildet die äußere Phase sowie mindestens einem Pfropfpolymerisat, welches erhältlich ist durch Polymerisation eines oder mehrerer harzbildender Monomerer, z.B. der oben genannten, in Gegenwart eines Kautschuks, z.B. Butadienhomo- oder -copolymerisat ("Pfropfgrundlage"). Dieses Pfropfpolymerisat ("Elastomerphase" oder "Pfropf kautschuk") bildet die disperse Phase im Matrixharz.

Die genannten Polymerisate können prinzipiell nach bekannten Verfahren, wie Emulsions-, Lösungs-, Masse-, Suspensions-, Fällungspolymerisation oder durch Kombination solcher Verfahren hergestellt werden.

Bei der Verarbeitung solcher ABS-Polymerisate, kommt es insbesondere bei hohen Verarbeitungstemperaturen häufig zu unerwünschten Geruchsentwicklungen. Diese Eigengerüche können zu Problemen bei speziellen Anwendungen der Formteile (beispielsweise im Automobilinnenraum) führen.

Als Lösung dieser Probleme wurde unter anderem der Zusatz spezieller Kombinationen aus Zinkoxid bzw. Magnesiumoxid und epoxidgruppenhaltigen Verbindungen in der Compoundierstufe vorgeschlagen (vgl. EP-B 849 317).

Durch Zusatz epoxidgruppenhaltiger Verbindungen kann jedoch das Modulverhalten und das Emissionsverhalten der Formmassen negativ beeinflusst werden. Zinkoxid und Magnesiumoxid können sich zusätzlich negativ auf das Glanzverhalten auswirken.

Eine weitere Aufgabe der vorliegenden Erfindung ist es daher, schlagzäh modifizierte thermoplastische Formmassen, insbesondere ABS-Polymerisat-Formmassen herzustellen, die nach Verarbeitung zu Formteilen keine störenden Gerüche aufweisen. Dabei sollen die sonstigen Eigenschaften nicht negativ beeinflusst werden.

Es wurde nun gefunden, dass diese Aufgabe durch thermoplastische Formmassen enthaltend spezielle Pfroptkautschuke als Schlagzähmodifikatoren gelöst wird.

Die Erfindung betrifft ein Verfahren zur Stabilisierung von Polymeren ausgewählt aus Acrylnitril-Butadien-Styrol-Terpolymerisaten (ABS), Methylmethacrylat-Butadien-Styrol-Terpolymerisaten (MBS), Polybutadien, Styrol-Butadien-Kautschuken, Acrylnitril-Butadien-Kautschuken, Polychloropren, Polyisopren, Acrylatkautschuken, Ethylen-Vinylacetat-Kautschuken, Vinylpyridin-Butadien-Kautschuken, Vinylpyridin-Styrol-Butadien-Kautschuken, Vinylpyridin-Acrylnitril-Butadien-Kautschuken sowie carboxylierten Kautschuken, dadurch gekennzeichnet, dass eine Kombination enthaltend
a) 1 bis 99 Gew.-Teile mindestens eines Antioxidans mit mindestens einer sterisch gehinderten Phenolgruppe und
b) 99 bis 1 Gew.-Teile mindestens einer wasserlöslichen anorganischen Phosphorverbindung ausgewählt aus der Gruppe enthaltend die Salze der hypophosphorigen Säure (H₃PO₂) und der phosphorigen Säure (H₃PO₃ bzw. HPO₂)
bzw. die Einzelkomponenten dieser Kombination zusammen oder einzeln in Form einer wässrigen Lösung bzw. einer wässrigen Dispersion bzw. einer wässrigen Emulsion bzw. einer Kombination aus diesen wässrigen Formen zu dem in wässriger Emulsion oder wässriger Suspension vorliegenden Polymermaterial gegeben wird, wobei sich die Mengen a) und b) zu 100 Gew.-Teilen ergänzen.

Geeignete Antioxidantien gemäß Komponente a) des Verfahrens sind Verbindungen, die mindestens eine sterisch gehinderte Phenolgruppe enthalten.

Beispiele für solche Verbindungen sind 2,6-Di-tert-butyl-4-methylphenol, 2-Tert-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methylbenzyl)-6-tert-butyl-4-methyl-phenyl]-terephthalat, 1,1-Bis-(3,5-dimethyl-2-hydox-phenyl)-butan, 2,2-Bis-(3,5-di-tert-butyl-4-hydroxyphenyl)-propan, 4,4'-Butylidenbis(2-tert.-butyl-5-methylphenol), 2,2'-Isobutylidenbis(4,6-dimethylphenol), 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan, Triethylenglycol-bis-3-(3-tert.-butyl-4-hydroxy-5-methylphenyl)-propionat, Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxa-bicyclo-[2.2.2]-octan, beispielsweise Octadecyl-3-(3,5-di-tert.-butyl-4-hydroxyphenyl)-propionat, 1,6-Hexandiol-bis-3-(3,5-di-tert.-butyl-4-hydroxyphenyl)-propionat oder Tetrakis[methylen-3-(3,5-di-tert.-butyl-4-hydroxyphenyl)propionat]methan, gemischte C₁₃₋₁₅-Alkyester von 3,5-Bis(1,1-dimethylethyl)-4-hydroxy-benzolpropionsäure, 2,2-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disufid sowie Verbindungen der allgemeinen Formel (I) oder Verbindungen der allgemeinen Formel (II) 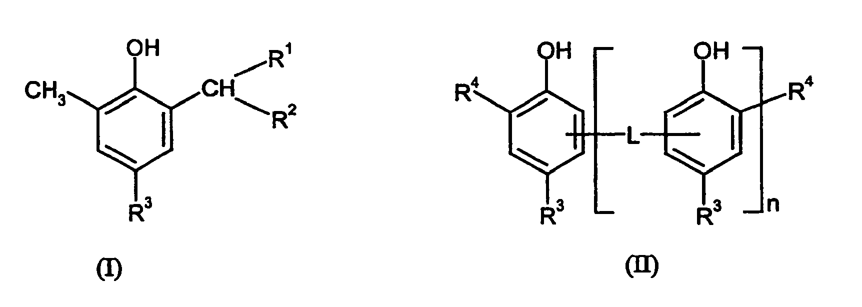 worin
R¹ = C₁-C₂-Alkyl,
R²= C₂-C₃₀-Alkyl
R³ = C₁-C₄-Alkyl
R⁴ = tert.-Butyl, Cyclohexyl
L = -CH₂-, Tricyclo[5,2,1,0^{2,6}]decan-3,8-ylen und
n ≧ 1 bedeuten,
sowie beliebige Mischungen der genannten Phenole.

Bevorzugte Phenole a) sind 2,2'-Methylen-bis-(6-tert-butyl-4-methylphenol), 2,2'-Methylen-bis-(6-tert-butyl-4-ethylphenol), Triethylenglycol-bis-3-(3-tert-butyl-4-hydroxy-5-methylphenyl)-propionat, Octadecyl-3-(3,5-di-tert.-butyl-4-hydroxyphenyl)-propionat, Verbindung (I) mit R¹ = CH₃, R² = n-C₁₄H₂₉ und R³ = CH₃, Verbindung (II) mit R³ = CH₃, R⁴ = t-C₄H₉, L = Tricyclo[5,2,1,0^{2,6}]decan-3,8-ylen und n ≤ 10.

Geeignete wasserlösliche anorganische Phosphorverbindungen gemäß Komponente b) sind Salze der hypophosphorigen Saure (H₃PO₂) oder der phosphorigen Säure (H₃PO₃ bzw. HPO₂).

Dabei bedeutet "wasserlöslich" im Sinne der Erfindung eine Löslichkeit von mindestens 1 g Salz in 100 g Wasser. Geeignete wasserlösliche anorganische Phosphorverbindungen gemäß Komponente B) besitzen eine Wasserlöslichkeit von bevorzugt mindestens 2 g Salz in 100 g Wasser und besonders bevorzugt mindestens 5 g Salz in 100 g Wasser (jeweils bei 50°C).

Beispiele für solche Verbindungen sind Natriumhypophosphit, Kaliumhypophosphit, Magnesiumhypophosphit, Calciumhypophosphit, Natriumphosphit, Kaliumphosphit, Calciumphosphit sowie Mischungen hieraus.

Bevorzugte Verbindungen b) sind Natriumhypophosphit und Natriumphosphit.

In dem erfindungsgemäßen Verfahren können zusätzlich als Komponente c) organische, nicht wasserlösliche phosphorhaltige Stabilisatoren wie beispielsweise Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit sowie Mischungen hieraus in einer Menge von bis zu 50 Gew.-Teilen, bezogen auf 100 Gew.-Teile a) + b), enthalten.

Bevorzugte Verbindungen c) sind Tris(2,4-di-tert-butylphenyl)-phosphit, Bis-(2,4-di-tert-butylphenyl)-pentaerythritdiphosphit und Tris-(nonylphenyl)-phosphit.

Weiterhin können die im erfindungsgemäßen Verfahren eingesetzten Kombinationen als Komponente d) schwefelhaltige Stabilisatoren wie beispielsweise Ester der β-Thio-dipropionsäure (z.B. Dilaurylthiodipropionat, Distearylthiodipropionat, Dimyristylthiodipropionat, Tridecylthiodipropionat), Mercaptobenzimidazol, das Zinksalz von 2-Mercaptobenzimidazol, Dioctadecyldisulfid, Pentaerythrit-tetrakis-(β-dodecylmercapto)-propionat, durch Polymerisation von Vinylmonomeren wie z.B. Styrol, Acrylnitril, Methylmethacrylat in Gegenwart von Mercaptanen erhaltene Verbindungen (siehe z.B. EP-PS 195 918) enthalten. sowie Mischungen hieraus in einer Menge von bis zu 50 Gew.-Teilen, bezogen auf 100 Gew.-Teile a) + b), enthalten. Bevorzugte Verbindungen d) sind Dilaurylthiodipropionat, Distearylthiodipropionat und durch Polymerisation von Vinylmonomeren wie z.B. Styrol, Acrylnitril, Methylmethacrylat in Gegenwart von Mercaptanen erhaltene Verbindungen.

Die im erfindungsgemäßen Verfahren eingesetzten Kombinationen eignen sich als Mittel zur Stabilisierung von Polymeren, insbesondere von in wässriger Dispersion wie z.B. wässriger Emulsion (Emulsionspolymerisation) oder wässriger Suspension (Suspensionspolymerisation) synthetisierten Polymeren gegen oxidativen Abbau bzw. sonstige durch Sauerstoffeinwirkung hervorgerufene Veränderungen.

Polymere, die durch Zusatz der Mischungen stabilisiert werden können, sind beispielsweise Acrylnitril-Butadien-Styrol-Terpolymerisate (ABS), Methylmethacrylat-Butadien-Styrol-Terpolymerisate (MBS), Styrol-Acrylnitril-Copolymerisate (SAN), α-Methylstyrol-Acrylnitril-Copolymerisate, Polystyrol, schlagzähes Polystyrol (HIPS), Polymethylmethacrylat, Polybutadien, Styrol-Butadien-Kautschuke, Acrylnitril-Butadien-Kautschuke, Polychloropren, Polyisopren, Acrylatkautschuke, Ethylen-Vinylacetat-Kautschuke, Vinylpyridin-Butadien-Kautschuke, Vinylpyridin-Styrol-Butadien-Kautschuke, Vinylpyridin-Acrylnitril-Butadien-Kautschuke sowie carboxylierte Kautschuke.

Besonders gute Wirksamkeit zeigen die Mischungen bei der Stabilisierung von ABS-Polymerisaten, MBS-Polymerisaten, Kautschukpolymeren.

Übliche Aufarbeitungsmethoden sind z.B. Ausfällen der Emulsionspolymerisate durch Zugabe von Elektrolyten wie z.B. Salzen oder Säuren oder durch starkes Abkühlen, Sprühtrocknung der Emulsion oder Abtrennung des Polymeren durch Filtration oder Zentrifugation bei Suspensionspolymerisaten.

Die zur Stabilisierung verwendeten Mengen der Kombinationen sind 0,1 bis 10 Gew.-Teile, bevorzugt 0,2 bis 8 Gew.-Teile und besonders bevorzugt 0,5 bis 5 Gew.-Teile bezogen auf 100 Gew.-Teile zu stabilisierendes Polymer.

Bevorzugt handelt es sich bei den durch das erfindungsgemäße Verfahren erhältlichen stabilisierten Polymermaterialien um durch Emulsionspolymerisation hergestellte Pfropfkautschukpolymere enthaltend
I) mindestens einem Kautschuk mit einer Glasübergangstemperatur ≤ 10°C als Pfropfgrundlage und
II) mindestens einer Pfropfhülle aufgebaut durch Polymerisation mindestens eines Vinylmonomeren in Gegenwart des Kautschuks.

Geeignete Kautschuke I) sind in Emulsionsform vorliegende Kautschuke mit Glasübergangstemperaturen ≤ 10°C. Beispiele für derartige Kautschuke sind Polymerisate des Butadiens, beispielsweise Polybutadien, Butadien/Styrol-Copolymerisate, vorzugsweise mit Styrolgehalten von 3 bis 40 Gew.-%, Butadien-Acrylnitril-Copolymerisate, vorzugsweise mit Acrylnitrilgehalten von 3 bis 20 Gew.-%, Terpolymerisate aus Butadien, Styrol und Acrylnitril, Co- und Terpolymerisate von Butadien mit anderen Vinylmonomeren wie beispielsweise Acrylsäure, Methacrylsäure, Vinylpyridin, C₁₋₈-Acrylsäureestern wie beispielsweise n-Butylacrylat oder 2-Ethylhexylacrylat, C₁₋₈-Methacrylsäureestern wie beispielsweise Methylmethacrylat sowie Homo- und Copolymerisate von C₁₋₈-Alkylacrylaten wie beispielsweise Poly-n-butylacrylat.

Bevorzugte Kautschuke I) sind Polybutadien, Butadien/Styrol-Copolymerisate, Butadien/Acrylnitril-Copolymerisate.

Besonders bevorzugt sind Polybutadien und Butadien/Styrol-Copolymerisate.

Für die Herstellung der Pfropfkautschukpolymere liegt der Kautschuk zweckmäßigerweise in Emulsionsform vor. Die zur Herstellung der Pfropfkautschukpolymere verwendeten Kautschuklatices besitzen in der Regel mittlere Teilchendurchmesser von 50 bis 1000 nm, vorzugsweise 80 bis 800 nm und besonders bevorzugt 100 bis 600 nm. Dabei können monomodale, bimodale, trimodale und multimodale Kautschuklatices verwendet werden..

Geeignete Vinylmonomere zum Aufbau der Pfropfhülle II) sind Monomere, die sich in wässriger Emulsion in Gegenwart eines Kautschuklatex polymerisieren lassen. Beispiele für solche Monomere sind Vinylaromaten wie beispielsweise Styrol oder α-Methylstyrol, ungesättigte Nitrile wie beispielsweise Acrylnitril oder Methacrylnitril, C₁₋₈-Acrylsäureester und -Methacrylsäureester wie beispielsweise n-Butylacrylat, tert.-Butylacrylat oder Methylmethacrylat sowie N-substituierte Maleinimide wie beispielsweise N-Phenylmaleinimid.

Besonders geeignet sind Monomermischungen wie beispielsweise Styrol/Acrylnitril-Gemische, Styrol/Methylmethacrylat-Gemische, Styrol/Acrylnitril/Methylmethacrylat-Gemische, Styrol/Acrylnitril/N-Phenylmaleinimid-Gemische. Besonders bevorzugte Vinylmonomere sind Styrol, Acrylnitril sowie Mischungen hieraus.

Die Pfropfkautschukpolymere besitzen einen Kautschukgehalt von 10 bis 90 Gew.-%, bevorzugt von 30 bis 80 Gew.-% und besonders bevorzugt von 40 bis 75 Gew.-%, bezogen auf I) und II).

Die Pfropfkautschukpolymere zeichnen sich durch eine verbesserte Stabilität im Aufarbeitungs- und Trocknungsprozess aus. Bereits geringe Gesamtmengen an organischen Stabilisatoren genügen, um im Produkt die verbesserten Thermostabilitäten zu erzielen.

Die Pfropfkautschukpolymere eignen sich beispielsweise als Schlagzähmodifikatoren für Thermoplastharze. Beispiele für solche Thermoplastharze sind Polyvinylchlorid, Polymethylmethacrylat, Styrol/Acrylnitril-Copolymerisate, α-Methylstyrol/Acrylnitril-Copolymerisate, Polyamide, Polyethylenterephthalate, Polybutylenterephthalate, aromatische Polycarbonate, aromatische Polyestercarbonate sowie Kombinationen ausgewählt aus diesen Thermoplastharzen.

Ein weiter im Folgenden offenbarter Gegenstand sind somit thermoplastische Formmassen enthaltend
A) mindestens einen Pfropfkautschuk hergestellt durch radikalische Emulsionspolymerisation von mindestens einem Vinylmonomeren, vorzugsweise von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, besonders bevorzugt von Styrol und Acrylnitril in Gegenwart mindestens eines in Latexform vorliegenden Kautschuks mit einer Glasübergangstemperatur unter 0°C, vorzugsweise eines in Latexform vorliegenden Butadienkautschuks, besonders bevorzugt Polybutadien, dem vor der Aufarbeitung eine Kombination aus
   a) mindestens einem Antioxidans mit mindestens einer sterisch gehinderten Phenolgruppe und
   b) mindestens einer wasserlöslichen anorganischen Phosphorverbindung ausgewählt aus Salzen der hypophosphorigen Säure (H₃PO₂) oder der phosphorigen Säure (H₃PO₃ bzw. HPO₂) in Form einer wässrigen Lösung oder Dispersion zugesetzt wurde und
B) mindestens ein thermoplastisches kautschukfreies Polymerisat erhalten durch Polymerisation von mindestens einem harzbildendem Vinylmonomeren, vorzugsweise von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid.

Formmassen können den Pfropfkautschuk A) und das thermoplastische kautschukfreie Vinylpolymerisat B) in beliebigen Mengenanteilen enthalten, üblicherweise im Bereich 5 bis 95 Gew.-Teile A) und 95 bis 5 Gew.-Teile B), vorzugsweise 10 bis 60 Gew.-Teile A) und 90 bis 40 Gew.-Teile B) und besonders bevorzugt 15 bis 50 Gew.-Teile A) und 85 bis 50 Gew.-Teile B).

Außerdem können die Formmassen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile A+B) verwendet.

Zur Herstellung des Pfropfkautschuks A) werden vorzugsweise 20 bis 70 Gew.-Teile, besonders bevorzugt 25 bis 60 Gew.-Teile, mindestens eines Vinylmonomeren, vorzugsweise eines Gemisches aus Styrol und Acrylnitril, wobei Styrol und/oder Acrylnitril ganz oder teilweise ersetzt werden kann durch α-Methylstyrol, Methylmethacrylat oder N-Phenylmaleinimid, in Gegenwart von vorzugsweise 30 bis 80 Gew.-Teilen, besonders bevorzugt 40 bis 75 Gew.-Teilen (jeweils bezogen auf Feststoff) eines Kautschuklatex polymerisiert.

Die bei diesen Pfropfpolymerisationen eingesetzten Monomeren sind vorzugsweise Mischungen aus Styrol und Acrylnitril im Gew.-Verhältnis 90:10 bis 50:50, besonders bevorzugt im Gew.-Verhältnis 80:20 bis 65:35.

Zur Herstellung der Pfropfkautschuke A) geeignete in Latexform vorliegende Kautschuke sind prinzipiell alle Kautschukpolymerisate mit einer Glasübergangstemperatur unter 0°C.

Beispiele für derartige Kautschukpolymerisate sind Polydiene wie z.B. Polybutadien und Polyisopren, Alkylacrylatkautschuke auf der Basis von C₁-C₈-Alkylacrylaten wie z.B. Poly-n-butylacrylat, Polysiloxankautschuke wie z.B. Produkte auf Basis von Polydimethylsiloxan.

Bevorzugte Kautschuke zur Herstellung der Pfropfkautschuke A) sind Butadienpolymerisatlatices, die durch Emulsionspolymerisation von Butadien und gegebenenfalls Comonomeren hergestellt werden können. Dieses Polymerisationsverfahren ist bekannt und z.B. in Houben-Weyl, Methoden der Organischen Chemie, Makromolekulare Stoffe, Teil 1, S. 674 (1961), Thieme Verlag Stuttgart, beschrieben.

Als Comonomere können dabei bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden. Beispielhaft und bevorzugt für solche Monomere werden Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglykoldiacrylate, Alkylenglykoldimethacrylate, Divinylbenzol genannt. Vorzugsweise wird Butadien alleine eingesetzt.

Der zur Herstellung des Pfropfkautschuks A) eingesetzte Kautschuk kann in Form eines Latex mit monomodaler, bimodaler, trimodaler oder multimodaler Teilchengrößeverteilung vorliegen. Bevorzugt sind Kautschuklatices, die eine monomodale, bimodale oder trimodale Teilchengrößeverteilung aufweisen.

Die mittleren Teilchendurchmesser (d₅₀-Wert) der zur Herstellung der Pfropfkautschuke A) eingesetzten monomodalen, bimodalen, trimodalen oder multimodalen Kautschuklatices können in weiten Bereichen variiert werden. Geeignete Teilchendurchmesser liegen z.B. zwischen 50 und 600 nm, vorzugsweise zwischen 80 und 550 nm und besonders bevorzugt zwischen 100 und 500 nm.

Zur Herstellung von Kautschuklatices mit bimodalen, trimodalen oder multimodalen Teilchengrößenverteilungen werden vorzugsweise monomodale Kautschuklatices unterschiedlicher mittlerer Teilchengröße und enger Teilchengrößenverteilung miteinander vermischt.

Unter monomodalen Kautschuklatices mit enger Teilchengrößenverteilung werden solche Latices verstanden, die eine Breite der Teilchengrößenverteilung (gemessen als d₉₀-d₁₀ aus der integralen Teilchengrößenverteilung) von 30 bis 150 nm, vorzugsweise von 35 bis 100 nm und besonders bevorzugt von 40 bis 80 nm aufweisen.

Bevorzugt werden monomodale Kautschuklatices mit enger Teilchengrößenverteilung durch Emulsionspolymerisation geeigneter Monomerer, vorzugsweise Butadien enthaltender Monomermischungen, besonders bevorzugt Butadien, nach der sogenannten Saatpolymerisationstechnik hergestellt, bei der zunächst ein feinteiliges Polymerisat, vorzugsweise ein Kautschukpolymerisat, besonders bevorzugt ein Butadienpolymerisat, als Saatlatex hergestellt und dann durch Weiterumsatz mit kautschukbildenden Monomeren, vorzugsweise mit Butadien enthaltenden Monomeren, zu größeren Teilchen weiterpolymerisiert wird (siehe z.B. im Houben-Weyl, Methoden der Organischen Chemie, Makromolekulare Stoffe Teil 1, S.339 (1961), Thieme Verlag Stuttgart).

Dabei wird vorzugsweise unter Verwendung des Saat-Batch-Verfahrens oder des Saat-Zulauf-Verfahrens gearbeitet.

Es ist bei der Herstellung der Kautschuklatices auch möglich, nach bekannten Methoden zunächst ein feinteiliges Butadienpolymerisat herzustellen und es anschließend in bekannter Weise zur Einstellung der erforderlichen Teilchengröße zu agglomerieren. Einschlägige Techniken sind beschrieben (vergl. EP-A 0 029 613; EP-A 0 007 810; DD-A 144 415; DE-A 1 233 131; DE-A 1 258 076; DE-A 2 101 650; GB-A 1 379 391).

Prinzipiell kann man die Kautschuklatices auch durch Emulgieren von feinteiligen Kautschukpolymerisaten in wäßrigen Medien herstellen (vergleiche beispielsweise JP-A 55-125 102).

Die Unterschiede der mittleren Teilchendurchmesser (d₅₀-Wert aus der integralen Teilchengrößenverteilung) der zur Abmischung verwendeten Kautschuklatices bei der bevorzugten Erzeugung bimodaler, trimodaler oder multimodaler Teilchengrößenverteilungen betragen mindestens 30 nm, vorzugsweise mindestens 60 nm und besonders bevorzugt mindestens 80 nm.

Die Gelgehalte der zur Herstellung der Pfropfkautschuke A) eingesetzten Kautschuklatices sind in der Regel unkritisch und können in weiten Bereichen variiert werden. Üblicherweise liegen die Werte zwischen ca. 30 % und 98 %, vorzugsweise zwischen 40 % und 95 %.

Die Gelgehalte der Kautschuklatices können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes).

Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, hydrierte Abietinsäure, Emulgatoren gemäß DE-A 3 639 904 und DE-A 3 913 509) eingesetzt.

Die Bestimmung des mittleren Teilchendurchmessers d₅₀ sowie die d₁₀- und d₉₀-Werte können durch Ultrazentrifugenmessung ermittelt werden (vgl. W. Scholtan, H. Lange: Kolloid Z. u. Z. Polymere 250, S. 782 bis 796 (1972)).

Die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Pfropfpolymerisation bei der Herstellung der Pfropfkautschuke A) kann so durchgeführt werden, dass das Monomerengemisch portionsweise oder kontinuierlich zu dem Kautschuklatex gegeben und polymerisiert wird. Dabei werden bevorzugt spezielle Monomer-Kautschuk-Verhältnisse eingehalten.

Die Pfropfpolymerisation zur Erzeugung des Pfropfkautschuks A) kann beispielsweise durch Monomerenzulauf derart durchgeführt werden, dass innerhalb der ersten Hälfte der Gesamtmonomerzudosierzeit 55 bis 90 Gew.%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert. Bevorzugt ist eine gleichmäßige kontinuierliche Zudosierung der Monomeren zum Kautschuklatex.

Bei der Pfropfpolymerisation können zusätzlich Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe). Geeignete Molekulargewichtsregler sind beispielsweise Alkylmercaptane wie n-Dodecylmercaptan, t-Dodecylmercaptan; sowie dimeres α-Methylstyrol oder Terpinolen.

Als Initiatoren zur Erzeugung des Pfropfkautschuks A) kommen anorganische und organische Peroxide, z.B. H₂O₂, Di-tert.-butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium-, oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur beträgt im allgemeinen 25°C bis 160°C, vorzugsweise 40°C bis 90°C. Dabei kann nach üblicher Temperaturführung, beispielsweise isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt 20°C beträgt.

Geeignete Emulgatoren sind beispielsweise übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren. Vorzugsweise werden Emulgatoren mit Carboxylgruppen (z.B. Salze von C₁₀-C₁₈-Fettsäuren, disproportionierte Abietinsäure, hydrierte Abietinsäure, Emulgatoren gemäß DE-A 3 639 904 und DE-A 3 913 509), eingesetzt.

Bei der Herstellung der Pfropfkautschuke A) wird der Pfropfkautschukemulsion vor der Aufarbeitung eine Kombination enthaltend
a) mindestens ein Antioxidans enthaltend mindestens eine sterisch gehinderte Phenolgruppe
   und
b) mindestens eine wasserlösliche anorganische Phosphorverbindung ausgewählt aus Salzen der hypophosphorigen Säure (H₃PO₂) oder der phosphorigen Säure (H₃PO₃ bzw. HPO₂)
wie oben beschrieben in Form einer wässrigen Lösung oder Dispersion zugesetzt.

Die Menge der Kombination aus a) und b) beträgt üblicherweise 0,1 bis 10 Gew.-Teile, bevorzugt 0,2 bis 8 Gew.-Teile und besonders bevorzugt 0,5 bis 5 Gew.-Teile (jeweils bezogen auf 100 Gew.-Teile zu stabilisierender Pfropfkautschuk).

Die gegebenenfalls zusätzlich verwendeten Mengen der Verbindungen c) betragen üblicherweise 0,1 bis 5 Gew.-Teile, bevorzugt 0,2 bis 3 Gew.-Teile und besonders bevorzugt 0,4 bis 2 Gew.-Teile (jeweils bezogen auf 100 Gew.-Teile zu stabilisierender Pfropfkautschuk).

Die gegebenenfalls zusätzlich verwendeten Mengen der Verbindungen d) betragen üblicherweise 0,2 bis 7 Gew.-Teile, bevorzugt 0,3 bis 6 Gew.-Teile und besonders bevorzugt 0,4 bis 5 Gew.-Teile (jeweils bezogen auf 100 Gew.-Teile zu stabilisierender Pfropfkautschuk).

Die Zugabe der vor der Aufarbeitung zugesetzten Komponenten a) und b) bzw. gegebenenfalls zusätzlich c) und / oder d) erfolgt in Form wässriger Zubereitungen, wobei wässrige Lösungen, wässrige Dispersionen, wässrige Emulsionen oder Kombinationen aus den genannten wässrigen Systemen eingesetzt werden können. Dabei kann die Zugabe der Verbindungen gemeinsam oder einzeln in Form der genannten wässrigen Systeme erfolgen.

Vorzugsweise wird der Pfropfkautschukemulsion vor der Aufarbeitung keinerlei schwefelhaltige organische Verbindung zugesetzt.

Als kautschukfreie Copolymerisate B) werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind solche Copolymerisate B), deren Acrylnitril-Anteil weniger als 30 Gew.-% beträgt.

Die Copolymerisate besitzen vorzugsweise mittlere Molekulargewichte M̅_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in DE-A 24 20 358 und DE-A 27 24 360 beschrieben. Durch Masse- bzw. Lösungspolymerisation hergestellte Vinylharze haben sich besonders bewährt. Die Copolymerisate können allein oder in beliebiger Mischung zugesetzt werden.

Zusätzlich zu aus Vinylmonomeren aufgebauten Thermoplastharzen ist auch die Verwendung von Polykondensaten, beispielsweise aromatischen Polycarbonaten, aromatischen Polyestercarbonaten, Polyestern, Polyamiden als kautschukfreies Copolymerisat in den Formmassen möglich.

Geeignete thermoplastische Polycarbonate und Polyestercarbonate sind bekannt (vgl. z.B. DE-A 14 95 626, DE-A 22 32 877, DE-A 27 03 376, DE-A 27 14 544, DE-A 30 00 610, DE-A 38 32 396, DE-A 30 77 934), z.B. herstellbar durch Umsetzung von Diphenolen der Formeln (III) und (IV) 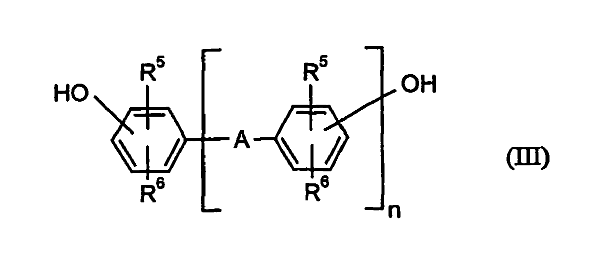 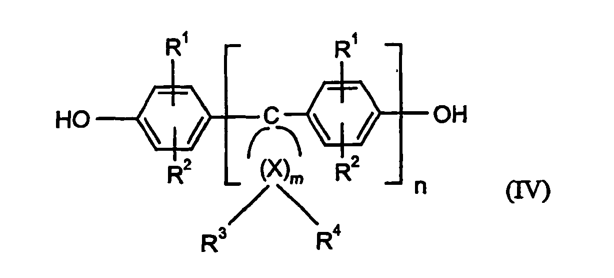 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (III) und (IV).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an tri - oder mehr als trifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-A 24 07 647, 24 07 776, 27 15 932).

Die Polyalkylenterephthalate können durch Einbau relativ kleiner Mengen drei- oder vierwertiger Alkohole oder drei- oder vierbasiger Carbonsäuren, wie sie in der DE-A 1 900 270 und der. US-A 3,692,744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine intrinsische Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexyhnethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Herstellung der Formmassen erfolgt durch Vermischen der Komponenten A) und B) sowie gegebenenfalls weitere Bestandteile auf üblichen Mischaggregaten (vorzugsweise auf Mehrwalzenstühlen, Mischextrudern oder Innenknetern).

Im Folgenden beschrieben ist weiterhin ein Verfahren zur Herstellung der Formmassen, wobei die Komponenten A) und B) und gegebenenfalls weitere Bestandteile vermischt und bei erhöhter Temperatur, im allgemeinen bei Temperaturen von 150 bis 300°C, compoundiert und extrudiert werden.

Den Formmassen können bei Herstellung, Aufarbeitung, Weiterverarbeitung und Endverformung die erforderlichen bzw. zweckmäßigen zusätzlichen Additive zugesetzt werden, z.B. UV-Stabilisatoren, Antistatika, Gleitmittel, Entformungsmittel, Flammschutzmittel, Füll- oder Verstärkerstoff (Glasfasern, Kohlefasern etc.) und Farbmittel.

Die Endverformung kann auf handelsüblichen Verarbeitungsaggregaten vorgenommen werden und umfasst beispielsweise Spritzgußverarbeitung, Plattenextrusion mit gegebenenfalls anschließender Warmverformung, Kaltverformung, Extrusion von Rohren und Profilen oder Kalander-Verarbeitung.

### Beispiele

In den folgenden Beispielen wird die Erfindung näher erläutert. Die angegebenen Teile sind immer Gewichtsteile und beziehen sich jeweils auf Festbestandteile bzw. polymerisierbare Bestandteile.

### Beispiele zur Thermostabilität von stabilisierten Polymeren

Die Ermittlung der Stabilität erfolgte durch Bestimmung der Temperatur (Tₘ), bei der die exotherme Reaktion ein Maximum zeigt, mittels Differential Scanning Calorimetry (DSC).

Alle DSC-Messungen erfolgten unter Verwendung eines DSC-2-Kalorimeters der Firma Perkin-Elmer (Spülgas Sauerstoff mit einer Sauerstoff-Durchflussmenge 60 ml/min). Die Heizrate bei der dynamische durchgeführten Messung lag konstant bei 20 K/min.

Als Polymere wurden eingesetzt :
Polymer I (Pfropfkautschuk erhalten durch Polymerisation von 41 Gew.-Teilen eines Styro1/Acrylnitril = 73:27-Gemisches in Gegenwart von 59 Gew.-Teilen eines Polybutadienlatex),
Polymer II (Polybutadien hergestellt durch Emulsionspolymerisation) und
Polymer III (Butadien/Acrylnitril = 64:36-Copolymer hergestellt durch Emulsionspolymerisation eines entsprechenden Butadien/Acrylnitril-Gemisches).

Bei der Durchführung der nachstehend beschriebenen Versuche wurden folgende Substanzen eingesetzt :
A) Octadecyl-3-(3,5-di-t-butyl-4-hydroxyphenyl)-propionat (Irganox® 1076 der Ciba, Basel, Schweiz)
B-1) Natriumhypophosphit
B-2) Natriumphosphit

Die Einarbeitung der in Tabelle 1 angegebenen Stabilisatoren bzw. Stabilisatorkombinationen erfolgte durch Zugabe der in wässriger Lösung bzw. wässriger Dispersion vorliegenden Stabilisatorkomponenten (Irganox® 1076 als 25% ige wässrige Dispersion erhalten durch Dispergieren unter Verwendung des Natriumsalzes der disproportionierten Abietinsäure, Natriumhypophosphit und Natriumphosphit als 10%ige wässrige Lösung) zu den in Emulsionsform vorliegenden Polymeren.

Die Aufarbeitung erfolgte durch Koagulation mit einem Magnesiumsulfat/Essigsäure = 1:1-Gemisch in Form einer 1 %igen wässrigen Lösung, Waschen mit Wasser und Trocknen bei 40°C im Vakuum.

**Tabelle 1**

| Beispiel | Polymer | Stabilisator (Gew.-Teile pro 100 Gew.-Teile Polymer) | Thermostabilität bei DSC-Messung tₘ (min) |
|---|---|---|---|
| 1 | I | 1 A + 1 B-1 | 229 |
| 2 | I | 1 A + 1 B-2 | 231 |
| 3 (Vergleich) | I | 1 A | 226 |
| 4 (Vergleich) | I | 1 B-1 | 204 |
| 5 (Vergleich) | I | -- | 204 |
| 6 | II | 1 A + 1 B-1 | 215 |
| 7 (Vergleich) | II | 1 A | 201 |
| 8 (Vergleich) | II | 1 B-1 | 190 |
| 9 (Vergleich) | II | -- | 195 |
| 10 | III | 1 A + 1 B-1 | 268 |
| 11 (Vergleich) | III | 1 A | 260 |
| 12 (Vergleich) | III | 1 B-1 | 214 |
| 13 (Vergleich) | III | -- | 212 |

Aus den in Tabelle 1 zusammengestellten Ergebnissen ist ersichtlich, dass die in den erfindungsgemäßen Verfahren eingesetzten Stabilisatorkombinationen zu einer deutlich besseren Oxidationsstabilität der damit behandelten Polymerisate führen. Dies ist besonders überraschend, da die alleinige Verwendung der Komponenten B-1 bzw. B-2 keinerlei stabilisierenden Effekt zeigt.

### Beispiele zur Thermostabilität von stabilisierten Pfropfkautschuken

Bei der Durchführung der nachstehend beschriebenen Versuche wurden folgende Substanzen eingesetzt:

Als Pfropfkautschuk wurde ein Gemisch aus einem ersten Pfropfkautschuklatex I (erhalten durch Polymerisation von 50 Gew.-Teilen eines Styrol/Acrylnitril-Gemisches (73:27) in Gegenwart von 50 Gew.-Teilen eines Polybutadienlatex mit einer mittleren Teilchengröße d₅₀ von 125 nm) und einem zweiten Pfropfkautschuklatex II (erhalten durch Polymerisation von 41 Gew.-Teilen eines Styrol/Acrylnitril-Gemisches (73:27) in Gegenwart von 59 Gew.-Teilen eines Polybutadienlatex mit einer mittleren Teilchengröße d₅₀ von 345 nm) eingesetzt, wobei das Gewichtsverhältnis von Pfropfkautschuk I zu Pfropfkautschuk II 1 : 1 betrug.

Die folgenden Stabilisatoren wurden dem Pfropfkautschuk in den in Tabelle 2 angegebenen Mengen zugesetzt:
A) Octadecyl-3-(3,5-di-t-butyl-4-hydroxyphenyl)-propionat (Irganox® 1076 der Ciba, Basel, Schweiz)
B) Natriumhypophosphit
C) Tris-(2,4-di-tert.-butylphenyl)-phosphit (Irgafos® 168 der Ciba, Basel, Schweiz)
D-1) Dilaurylthiodipropionat (Irganox® PS 800 Ciba, Basel, Schweiz)
D-2) In Latexform vorliegendes schwefelhaltiges Polymerisat aus Styrol, Acrylnitril und *tert*-Dodecylmercaptan, hergestellt gemäß EP-B 195 918, Beispiel 1

Die Einarbeitung der Stabilisatoren erfolgte durch Zugabe der in Form wässriger Lösungen bzw. wässriger Dispersionen vorliegenden Substanzen zu den Pfropfkautschuklatices.

Die Aufarbeitung erfolgte jeweils durch Ausfällung mit einem 1:1-Gemisch von Magnesiumsulfat und Essigsäure in Form einer 1%igen wässrigen Lösung, Waschen mit Wasser und Trocknen bei 40°C im Vakuum.

Die Messung der Thermostabilität der Pfropfkautschuke erfolgte durch Ermittlung der oxidativen Verfärbung unter Verwendung eines Metrastat-Testsystems PSD 260 (Hersteller : PSD-Prüfgeräte-Systeme Dr. Stapfer GmbH, Düsseldorf). Dabei wird bei vorgegebener Temperatur das Pfropffcautschukpulver unter Luft gelagert und die Zeit bis zur Verfärbung ermittelt. Dies stellt eine Simulation der thermischen Belastung beim Trocknungsvorgang dar.

Die Ermittlung der Stabilität der unterschiedlich stabilisierten Pfropfkautschuke erfolgte durch Bestimmung der Zeit, nach der bei 180°C eine Braunverfärbung einsetzte.

Aus den in Tabelle 2 zusammengestellten Ergebnissen ist ersichtlich, dass die erfindungsgemäß stabilisierten Pfropfkautschuke sehr gute thermische Beständigkeiten aufweisen, wobei bereits deutlich geringere Gesamtmengen an organischen Stabilisatoren im Produkt in verbesserten oder vergleichbaren Thermostabilitäten resultieren.

**Tabelle 2**

| Beispiel | Stabilisator (Gew.-Teile pro 100 Gew.-Teile Pfropfkautschuk) | | | | | Gesamtmenge an orga-nischem Stabilisator (Gew.-Teile pro 100 Gew.-Teile Pfropfkautschuk) | Metrastat-Test (Zeit bis zur beginnenden Verbräunung in min) |
|---|---|---|---|---|---|---|---|
| | A | B | C | D-1 | D-2 | | |
| 14 | 0.75 | 0.5 | | | 1.75 | 2.50 | 220 |
| 15 | 0.75 | | | | 2.65 | 3.40 | 100 |
| (Vergleich) | | | | | | | |
| 16 | 0.75 | 0.5 | | 0.6 | | 1.35 | 210 |
| 17 | 0.75 | | | 0.9 | | 1.65 | 205 |
| (Vergleich) | | | | | | | |
| 18 | 0.75 | 0.5 | 0.8 | | | 1.55 | 140 |
| 19 | 1.0 | 0.5 | 0.8 | | | 1.80 | 150 |
| 20 | 1.0 | | 0.8 | | | 1.80 | 135 |
| (Vergleich) | | | | | | | |

### Beispiele zum Geruchsverhalten von stabilisierten Formmassen

### Eingesetzte Komponenten:

### Pfropfkautschuk A 1:

Gemisch aus einem ersten Pfropfkautschuklatex I (erhalten durch Polymerisation von 50 Gew.-Teilen eines Styrol/Acrylnitril = 73 : 27-Gemisches in Gegenwart von 50 Gew.-Teilen eines Polybutadienlatex mit einer mittleren Teilchengröße d₅₀ von 125 nm) und einem zweiten Pfropfkautschuklatex II (erhalten durch Polymerisation von 41 Gew.-Teilen eines Styrol/Acrylnitril = 73 : 27-Gemisches in Gegenwart von 59 Gew.-Teilen eines Polybutadienlatex mit einer mittleren Teilchengröße d₅₀ von 345 nm) im Gewichtsverhältnis Pfroptkautschuk I : Pfropfkautschuk II von 1 : 1, wobei dem Pfropfkautschuk vor der Aufarbeitung eine Stabilisatorkombination K 1 in Form einer wässrigen Dispersion zugesetzt wurde.

### Pfropfkautschuk A 2:

Pfropfkautschuk analog A 1, wobei dem Pfropfkautschuk vor der Aufarbeitung eine Stabilisatorkombination K 2 in Form einer wässrigen Dispersion zugesetzt wurde.

### Pfropfkautschuk A 3:

Pfropfkautschuk analog A 1, wobei dem Pfropfkautschuk vor der Aufarbeitung eine Stabilisatorkombination K 3 in Form einer wässrigen Dispersion zugesetzt wurde.

### Pfropfkautschuk A 4:

Pfropikautschuk analog A 1, wobei dem Pfropfkautschuk vor der Aufarbeitung eine Stabilisatorkombination K 4 in Form einer wässrigen Dispersion zugesetzt wurde.

### Pfropfkautschuk A 5 :

Pfropfkautschuk analog A 1 , wobei dem Pfropfkautschuk vor der Aufarbeitung eine Stabilisatorkombination K 5 in Form einer wässrigen Dispersion zugesetzt wurde.

### Pfropfkautschuk A 6:

Pfropfkautschuk analog A 1, wobei dem Pfropfkautschuk vor der Aufarbeitung eine Stabilisatorkombination K 6 in Form einer wässrigen Dispersion zugesetzt wurde.

### Pfropfkautschuk A 7:

Pfropfkautschuk analog A 1, wobei dem Pfropfkautschuk vor der Aufarbeitung eine Stabilisatorkombination K 7 in Form einer wässrigen Dispersion zugesetzt wurde.

Eingesetzte Stabilisatorkombinationen (jeweils bezogen auf 100 Gew.-Teile Pfropfkautschuk):
- K 1 :: 0.75 Teile Octadecyl-3-(3,5-di-t-butyl-4-hydroxyphenyl)-propionat (Irganox® 1076 der Ciba, Basel, Schweiz), 0.8 Teile Tris-(2,4-di-tert.-butylphenol)-phosphit (Irgaphos® 168, Ciba, Basel, Schweiz), 0.5 Natriumhypophosphit
- K 2 :: 1.0 Teile Irganox® 1076, 0.8 Teile Irgaphos® 168, 0.5 Teile Natriumhypophosphit
- K 3 :: 1.0 Teile Irganox® 1076, 0.8 Teile Irgaphos® 168
- K 4 :: 0.75 Teile Irganox 1076®, 1.75 Teile Polymerisat aus Styrol, Acrylnitril und t-Dodecylmercaptan, hergestellt gemäß EP-B 195 918, Beispiel 1, 0.5 Teile Natriumhypophosphit
- K 5 :: 0.75 Teile Irganox® 1076, 2.65 Teile Polymerisat aus Styrol, Acrylnitril und t-Dodecylmercaptan, hergestellt gemäß EP-B 195 918, Beispiel 1
- K 6 :: 0.75 Teile Irganox® 1076, 0.6 Teile Irganox® PS 800 (Ciba, Basel, Schweiz), 0.5 Teile Natriumhypophosphit
- K 7 :: 0.75 Teile Irganox® 1076, 0.9 Teile Irganox® PS 800

### Harzkomponente B:

Statistisches Styrol/Acrylnitril-Copolymerisat (Styrol:Acrylnitril-Gewichtsverhältnis 72:28) mit einem M̅_{w} von ca. 85.000 und M̅_{w} / M̅ₙ -1 ≤ 2 erhalten durch radikalische Lösungspolymerisation.

### Formmassen

Die oben beschriebenen Polymerkomponenten werden in den in Tabelle 3 angegebenen Anteilen, 2 Gew.-Teilen Ethylendiaminbisstearylamid und 0,1 Gew.-Teilen eines Silikonöls in einem Innenkneter vermischt und nach Granulierung bei einer Verarbeitungstemperatur von 240°C durch Spritzgießen zu Prüfkörpern verarbeitet.

Die Beurteilung des Geruchsverhaltens erfolgte nach der Empfehlung des Verbandes der Automobilindustrie e.V. (VDA) zur Bestimmung des Geruchsverhaltens von Werkstoffen der Kraftfahrzeug-Innenausstattung vom Oktober 1992 (Geruchstest VDA 270 C3, siehe Dokumentation Kraftfahrwesen e.V. (DKF), Ulrichstraße 14, Bietigheim-Bissingen).

Bewertungsskala für die Geruchsbeurteilung nach VDA 270
Note 1 : nicht wahrnehmbar
Note 2 : wahrnehmbar, nicht störend
Note 3 : deutlich wahrnehmbar, aber noch nicht störend
Note 4 : störend
Note 5 : stark störend
Note 6 : unerträglich

Der Yellowness-Index (YI) wurde gemäß ASTM-Norm D 1925 (Lichtart: C, Beobachter: 2°, Messöffnung: Large Area Value) nach der Gleichung YI = (128 X-106 Z)/Y, mit X,Y,Z = Farbkoordinaten gemäß DIN 5033, ermittelt. Die Ergebnisse sind ebenfalls in Tabelle 3 angegeben.

Aus Tabelle 3 ist ersichtlich, dass die Formmassen, welche erfindungsgemäß stabilisierte Pfropfkautschuke enthalten verbesserte Yellowness-Werte aufweisen und insbesondere ein verbessertes Geruchsverhalten dahingehend aufweisen, dass der Geruch nicht mehr als störend empfunden wird.

**Tabelle 3 : Zusammensetzung und Prüfwerte der Formmassen**

| Beispiel | A 1 Gew.-Teile | A 2 Gew.-Teile | A 3 Gew.-Teile | A 4 Gew.-Teile | A 5 Gew.-Teile | A 6 Gew.-Teile | A 7 Gew.-Teile | B Gew.-Teile | YI | Geruchsbeurteilung (nach VDA 270 C3) |
|---|---|---|---|---|---|---|---|---|---|---|
| 21 | 30 | -- | -- | -- | -- | -- | -- | 70 | 30 | 2.5 |
| | | | | | | | | | | |
| 22 -- | | 30 | -- | -- | -- | -- | -- | 70 | 31 | 2.5 |
| | | | | | | | | | | |
| 23 | -- | -- | 30 | -- | -- | -- | -- | 70 | 34 | 3.5 |
| (Vergleich) | | | | | | | | | | |
| 24 | -- | -- | -- | 30 | -- | -- | -- | 70 | 34 | 3 |
| | | | | | | | | | | |
| 25 | -- | -- | -- | -- | 30 | -- | -- | 70 | 36 | 4.5 |
| (Vergleich) | | | | | | | | | | |
| 26 | -- | -- | -- | -- | -- | 30 | -- | 70 | 33 | 3 |
| | | | | | | | | | | |
| 27 | -- | -- | -- | -- | -- | -- | 30 | 70 | 35 | 4.5 |
| (Vergleich) | | | | | | | | | | |

## Patentansprüche

1. Verfahren zur Stabilisierung von Polymeren, ausgewählt aus Acrylnitril-Butadien-Styrol-Terpolymerisaten (ABS), Methylmethacrylat-Butadien-Styrol-Terpolymerisaten (MBS), Polybutadien, Styrol-Butadien-Kautschuken, Acrylnitril-Butadien-Kautschuken, Polychloropren, Polyisopren, Acrylatkautschuken, Ethylen-Vinylacetat-Kautschuken, Vinylpyridin-Butadien-Kautschuken, Vinylpyridin-Styrol-Butadien-Kautschuken Vinylpyridin-Aciylnitril-Butadien-Kautschuken sowie carboxylierte Kautschuken, **dadurch gekennzeichnet, dass** eine Kombination enthaltend
a) 1 bis 99 Grew.-Teile mindestens eines Antioxidans mit mindestens einer sterisch gehinderten Phenolgruppe und
b) 99 bis 1 Gew.-Teile mindestens einer wasserlöslichen anorganischen Phosphorverbindung ausgewählt aus der Gruppe enthaltend die Salze der hypophosphorigen Säure (H₃PO₂) und der phosphorigen Säure (H₃PO₃ bzw. HPO₂)
wobei sich die Mengen a) und b) zu 100 Gew.-Teile ergänzen,
bzw. die Einzelkomponenten dieser Kombination zusammen oder einzeln in Form einer wässrigen Lösung bzw. einer wässrigen Dispersion bzw. einer wässrigen Emulsion bzw. einer Kombination aus diesen wässrigen Formen zu dem in wässriger Emulsion oder wässriger Suspension vorliegenden Polymermaterial gegeben wird.

2. Verfahren gemäß Anspruch 1, **dadurch gekennzeichnet, dass** 0,1 bis 10 Gew.-Teile der Kombination enthaltend a) und b) pro 100 Gew.-Teile Polymer zugesetzt werden.

3. Verfahren gemäB Anspruch 1, **dadurch gekennzeichnet, dass** als Komponente a) Octadecyl-3-(3,5-di-t-butyl-4-hydroxyphenyl)-propionat und als Komponente b) Natriumhypophosphit zugesetzt werden.

4. Verfahren gemäß Anspruch 1, **dadurch gekennzeichnet, dass** zusätzlich mindestens ein organischer phosphorhaltiger Stabilisator als Komponente c) zugesetzt wird.

5. Verfahren gemäß Anspruch 1, **dadurch gekennzeichnet, dass** zusätzlich mindestens ein schwefelhaltiger Stabilisator als Komponente d) zugesetzt wird.

## Claims

1. Process for stabilizing polymers selected from acrylonitrile-butadiene-styrene terpolymers (ABS), methyl methacrylate-butadiene-styrene terpolymers (MBS), polybutadiene, styrene-butadiene rubbers, acrylonitrile-butadiene rubbers, polychloroprene, polyisoprene, acrylate rubbers, ethylene-vinyl acetate rubbers, vinylpyridine-butadiene rubbers, vinylpyridine-styrene-butadiene rubbers, vinylpyridine-acrylonitrile-butadiene rubbers and carboxylated rubbers, **characterized in that** a combination comprising
a) 1 to 99 parts by weight of at least one antioxidant having at least one sterically hindered phenol group, and
b) 99 to 1 part by weight of at least one water-soluble inorganic phosphorus compound selected from the group consisting of the salts of hypophosphorous acid (H₃PO₂) and phosphorous acid (H₃PO₃ or HPO₂),
the amounts of a) and b) totalling 100 parts by weight,
or the individual components thereof are added together or individually in the form of an aqueous solution or an aqueous dispersion or an aqueous emulsion, or a combination of these aqueous forms, to the polymeric material present in aqueous emulsion or aqueous suspension.

2. Process according to Claim 1, **characterized in that** 0.1 to 10 parts by weight of the combination comprising a) and b) are added per 100 parts by weight of polymer.

3. Process according to Claim 1, **characterized in that** octadecyl 3-(3,5-di-t-butyl-4-hydroxyphenyl)propionate is added as component a) and sodium hypophosphite as component b).

4. Process according to Claim 1, **characterized in that** at least one organic phosphorus-containing stabilizer is added as component c).

5. Process according to Claim 1, **characterized in that** at least one sulphur-containing stabilizer is added as component d).

## Revendications

1. Procédé pour stabiliser des polymères choisis parmi les terpolymères acrylonitrile-butadiène-styrène (ABS), les terpolymères méthacrylate de méthylebutadiène-styrène (MBS), le polybutadiène, les caoutchoucs styrène-butadiène, les caoutchoucs acrylonitrile-butadiène, le polychloroprène, le polyisoprène, les caoutchoucs acrylates, les caoutchoucs éthylène-acétate de vinyle, les caoutchoucs vinylpyridine-butadiène, les caoutchoucs vinylpyridinestyrène-butadiène, les caoutchoucs vinylpyridine-acrylonitrile-butadiène, ainsi que les caoutchoucs carboxylés, **caractérisé en ce qu'**une combinaison contenant
a) 1 à 99 parties en poids d'au moins un antioxydant comportant au moins un groupe phénol à empêchement stérique, et
b) 99 à 1 partie en poids d'au moins un composé du phosphore inorganique soluble dans l'eau choisi dans le groupe contenant les sels de l'acide hypophosphoreux (H₃PO₂) et de l' acide phosphoreux (H₃PO₃ ou HPO₂),
la somme des quantités de a) et de b) faisant 100 parties en poids,
ou les composants individuels de cette combinaison sont, ensemble ou à titre individuel, sous forme d'une solution aqueuse ou d'une dispersion aqueuse ou d'une émulsion aqueuse ou d'une combinaison aqueuse de ces formes aqueuses, ajoutés au matériau polymère présent en émulsion aqueuse ou en suspension aqueuse.

2. Procédé selon la revendication 1, **caractérisé en ce qu'**on ajoute 0,1 à 10 parties en poids de la combinaison contenant a) et b), pour 100 parties en poids du polymère.

3. Procédé selon la revendication 1, **caractérisé en ce qu'**on ajoute en tant que composant a) du 3-(3,5-di-tert-butyl-4-hydroxyphényl)propionate d'octadécyle et en tant que composant b) de l'hypophosphite de sodium.

4. Procédé selon la revendication 1, **caractérisé en ce qu'**on ajoute en outre, en tant que composant c), au moins un stabilisant contenant du phosphore organique.

5. Procédé selon la revendication 1, **caractérisé en ce qu'**on ajoute en outre en tant que composant d) au moins un stabilisant contenant du soufre.
